# EUROPÄISCHE PATENTSCHRIFT

(11) **EP 3 491 850 B1**
(45) Veröffentlichungstag und Bekanntmachung des Hinweises auf die Patenterteilung: **23.06.2021**
(21) Anmeldenummer: 17740402.7
(22) Anmeldetag: 20.07.2017
(51) Int. Cl.: H04W 4/70, H04W 36/30, H04L 5/00, H04W 36/14, H04W 36/16, H04W 84/12

(54) **VORRICHTUNGEN UND VERFAHREN ZUM KOMMUNIZIEREN ÜBER EIN KOMMUNIKATIONSNETZWERK**
DEVICES AND METHOD FOR COMMUNICATING VIA A COMMUNICATION NETWORK
DISPOSITIFS ET PROCÉDÉ DE COMMUNICATION VIA UN RÉSEAU DE COMMUNICATION

(30) Priorität: 27.07.2016 EP 16181532
(43) Veröffentlichungstag der Anmeldung: 05.06.2019
(73) Patentinhaber: Deutsche Telekom AG, 53113 Bonn (DE)
(72) Erfinder: BREITBACH, Markus, 53227 Bonn (DE)
(74) Vertreter: Braun-Dullaeus Pannen Emmerling Patent- & Rechtsanwaltspartnerschaft mbB
(86) Internationale Anmeldenummer: PCT/EP2017/068309
(87) Internationale Veröffentlichungsnummer: WO 2018/019690

(56) Entgegenhaltungen:
- US-A1- 2010 093 358
- US-A1- 2010 304 745
- US-A1- 2014 250 513
- "NGMN_5G_White_Paper_V1_0", ETSI DRAFT; NGMN_5G_WHITE_PAPER_V1_0, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. SmartM2M - Open, 25. Juni 2015 (2015-06-25), Seiten 1-125, XP014258882,

## Beschreibung

Die Erfindung betrifft Vorrichtungen und Verfahren zum Kommunizieren über ein Kommunikationsnetzwerk mit einer ersten Basisstation, insbesondere einer WLAN-Basisstation, wenigstens einer zweiten Basisstation, insbesondere einer Mobilfunk-Basisstation, und wenigstens einem Kommunikationsendgerät.

Informations- und Kommunikationstechnologien sind heutzutage im Lebensalltag von Privathaushalten nicht mehr wegzudenken. Aktivitäten wie das Kommunizieren, die Informationssuche, das Einkaufen oder Bestellen von Waren über das Internet sind für viele Menschen selbstverständlich geworden. Häufig erfolgt dabei der Zugang zum Internet beispielsweise über ein Home-Gateway oder ein vergleichbares Gerät, das als Schnittstelle für alle innerhalb des Privathaushalts vorhandenen Netze und Bussysteme dient. Zur drahtlosen Kommunikation insbesondere mit den in einem Privathaushalt vorhandenen mobilen Kommunikationsendgeräten, beispielsweise Smartphones und Tablet-Computer, umfasst ein solches Home-Gateway eine WLAN-Basisstation (auch als WLAN Access Point bezeichnet) oder ist mit einer solchen verbunden.

Eine weitere häufig genutzte Möglichkeit, auf das Internet zuzugreifen, stellen die sogenannten "WiFi-Hotspots" dar, bei denen es sich in der Regel um öffentliche drahtlose WLAN-Basisstationen handelt, die gemäß dem WiFi-Drahtloskommunikationsstandard ausgestaltet sind und (gegebenenfalls gegen Bezahlung) für jedermann zugänglich sind. WiFi-Hotspots sind sowohl in öffentlichen Räumen (Bibliotheken, Krankenhäusern, Flughäfen, Bahnhöfen usw.) als auch in privaten Räumen, z. B. Restaurants, Cafes, Hotels etc. installiert.

Es ist absehbar, dass in der nahen Zukunft die Zahl der über ein Mobilfunknetz und/oder ein WLAN-Netz kommunikationsfähigen (mobilen) Endgeräte rasant zunehmen wird, wobei es sich bei den Kommunikationsendgeräten neben "klassischen" Mobiltelefonen auch um "intelligente" Vorrichtungen wie Sensoren, Kameras, Verkehrsinfrastruktur und ähnlichen Vorrichtungen handeln wird, welche Teil des "Internet of Things (loT)" sein werden. Das Handling des damit verbundenen Kommunikationsaufkommens stellt, insbesondere in Hinblick auf den Verbrauch von Energie- und Netzwerkressourcen und die Ausfallsicherheit, eine enorme Herausforderung für bestehende Mobilfunknetzinfrastrukturen dar.

Die Dokumente US 2014/250513 A1 (CAO JAMES [CA] ET AL) 4. September 2014 (2014-09-04) und US 2010/093358 A1 (CHEONG DONG JO [KR] ET AL) 15. April 2010 (2010-04-15) sind relevante Dokumente des Standes der Technik.

Vor diesem Hintergrund ist es die Aufgabe der vorliegenden Erfindung, verbesserte Vorrichtungen und Verfahren zum Kommunizieren über ein Kommunikationsnetzwerk bereitzustellen.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt betrifft die Erfindung ein Verfahren zum Kommunizieren über ein Kommunikationsnetzwerk mit einer ersten Basisstation, einer zweiten Basisstation und einem Kommunikationsendgerät. Das Verfahren umfasst das Bereitstellen und Betreiben eines ersten Subnetzwerkes des Kommunikationsnetzwerkes mittels einer Managemententität, wobei im Betrieb des ersten Subnetzwerkes des Kommunikationsnetzwerkes die erste Basisstation dem ersten Subnetzwerk zugeordnet ist und ausgebildet ist, dem Kommunikationsendgerät die Kommunikation über das erste Subnetzwerk des Kommunikationsnetzwerks zu ermöglichen. Ferner umfasst das Verfahren, ansprechend auf eine Zustandsänderung der ersten Basisstation, das Bereitstellen und Betreiben eines zweiten Subnetzwerkes des Kommunikationsnetzwerkes mittels der Managemententität, wobei im Betrieb des zweiten Subnetzwerkes des Kommunikationsnetzwerkes die zweite Basisstation dem zweiten Subnetzwerk zugeordnet ist und ausgebildet ist, dem Kommunikationsendgerät die Kommunikation über das zweite Subnetzwerk des Kommunikationsnetzwerks zu ermöglichen.

Bei der ersten Basisstation kann es sich insbesondere um eine WLAN-Basisstation, eine Zigbee-Basisstation, eine Bluebooth-Basisstation oder eine Femto-Basisstation handeln. Bei der zweiten Basisstation kann es sich insbesondere um eine Mobilfunk-Basisstation handeln.

Bei der Zustandsänderung der ersten Basisstation kann es sich um ein Ausschalten, ein Deaktivieren, einen Ausfall aufgrund eines technisches Defekts oder eine andere Zustandsänderung der ersten Basisstation handeln, die zur Folge hat, dass das Kommunikationsendgerät nicht mehr über das erste Subnetzwerk des Kommunikationsnetzwerks kommunizieren kann.

Das erfindungsgemäße Verfahren führt zum einen zu einer Energieersparnis durch die reduzierte Verwendung der ersten Basisstation und zum anderen zu einer Ausfallsicherheit, da bei einem Ausfall der ersten Basisstation aufgrund eines technisches Defekts der weitere Zugang beispielsweise zum Internet durch ein aktives Bereitstellen des zweiten Subnetzwerkes durch die Managemententität sichergestellt werden kann.

In einer Ausführungsform bildet das Kommunikationsnetzwerk ein Zugangsnetzwerk, das im Betrieb des ersten Subnetzwerkes dem Kommunikationsendgerät über die erste Basisstation den Zugang zum Internet ermöglicht und im Betrieb des zweiten Subnetzwerkes dem Kommunikationsendgerät über die zweite Basisstation den Zugang zum Internet ermöglicht.

Bei der Erfindung handelt es sich bei dem ersten logischen Subnetzwerk und dem zweiten logischen Subnetzwerk um Slices des Kommunikationsnetzwerkes. Der Begriff "Netzwerk-Slice" bzw. "Netzwerk-Slicing" beschreibt ein Konzept zum Betreiben mehrerer logische Netzwerke als virtuell unabhängige, d.h. logisch entkoppelte Einheiten auf einer gemeinsamen physikalischen Netzwerk-Infrastruktur. In diesem Sinne stellt ein Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten.

In einer Ausführungsform ist im Betrieb des zweiten Subnetzwerkes des Kommunikationsnetzwerkes wenigstens eine weitere Mobilfunk-Basisstation dem zweiten Subnetzwerk zugeordnet und ausgebildet, dem Kommunikationsendgerät die Kommunikation über das zweite Subnetzwerk des Kommunikationsnetzwerks zu ermöglichen.

In einer Ausführungsform umfasst das Bereitstellen und Betreiben des zweiten Subnetzwerkes des Kommunikationsnetzwerkes mittels der Managemententität das Auswählen der zweiten Basisstation aus einer Vielzahl von Mobilfunk-Basisstationen des Kommunikationsnetzwerkes auf der Grundlage der geographischen Position der ersten Basisstation.

In einer Ausführungsform umfasst das Auswählen der zweiten Basisstation aus einer Vielzahl von Mobilfunk-Basisstationen des Kommunikationsnetzwerkes auf der Grundlage der geographischen Position der ersten Basisstation ferner das Bestimmen der geographischen Position der ersten Basisstation durch die Managemententität.

In einer Ausführungsform umfasst das Verfahren ferner den Schritt, dass die erste Basisstation die Managemententität über die Zustandsänderung der ersten Basisstation informiert.

In einer Ausführungsform umfasst das Verfahren ferner den Schritt, dass die Managemententität die Zustandsänderung der ersten Basisstation auf der Grundlage einer Änderung der Struktur des ersten Subnetzwerkes des Kommunikationsnetzwerkes erkennt.

Gemäß einem zweiten Aspekt betrifft die Erfindung eine Managemententität, die dazu ausgebildet ist, das Verfahren gemäß dem ersten Aspekt der Erfindung oder zumindest Teilen davon durchzuführen. Mit anderen Worten: die Managemententität ist ausgebildet, ein erstes Subnetzwerk eines Kommunikationsnetzwerkes bereitzustellen und zu betreiben, wobei im Betrieb des ersten Subnetzwerkes des Kommunikationsnetzwerkes eine erste Basisstation dem ersten Subnetzwerk zugeordnet ist und ausgebildet ist, einem Kommunikationsendgerät die Kommunikation über das erste Subnetzwerk des Kommunikationsnetzwerks zu ermöglichen, und, ansprechend auf eine Zustandsänderung der ersten Basisstation, ein zweites Subnetzwerk des Kommunikationsnetzwerkes bereitzustellen und zu betreiben, wobei im Betrieb des zweiten Subnetzwerkes des Kommunikationsnetzwerkes eine zweite Basisstation dem zweiten Subnetzwerk zugeordnet ist und ausgebildet ist, dem Kommunikationsendgerät die Kommunikation über das zweite Subnetzwerk des Kommunikationsnetzwerks zu ermöglichen.

Bei der ersten Basisstation kann es sich insbesondere um eine WLAN-Basisstation, eine Zigbee-Basisstation, eine Bluebooth-Basisstation oder eine Femto-Basisstation handeln. Bei der zweiten Basisstation kann es sich insbesondere um eine Mobilfunk-Basisstation handeln.

In einer Ausführungsform ist die Managemententität ferner ausgebildet, die zweite Basisstation aus einer Vielzahl von Mobilfunk-Basisstationen des Kommunikationsnetzwerkes auf der Grundlage der geographischen Position der ersten Basisstation auszuwählen.

In einer Ausführungsform ist die Managemententität ferner ausgebildet, die geographische Position der ersten Basisstation zu bestimmen.

In einer Ausführungsform ist die Managemententität ferner ausgebildet, die Zustandsänderung der ersten Basisstation auf der Grundlage einer Änderung der Struktur des ersten Subnetzwerkes des Kommunikationsnetzwerkes zu erkennen.

In einer Ausführungsform handelt es sich bei der Managemententität um einen SDN-Controller oder SDN-Orchestrator.

Weitere Ausführungsbeispiele werden Bezug nehmend auf die beiliegenden Zeichnungen erläutert. Es zeigen:
- Fig. 1: eine schematische Darstellung eines Verfahrens zum Kommunizieren über ein Kommunikationsnetzwerk gemäß einer Ausführungsform; und
- Fig. 2: eine schematische Darstellung eines Kommunikationsnetzwerks mit einer Managemententität gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

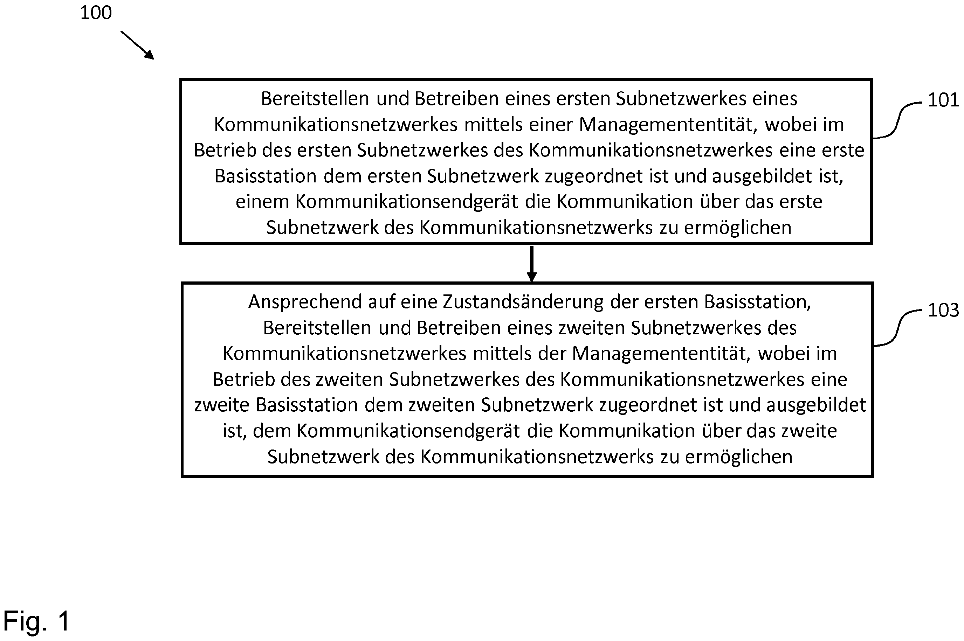

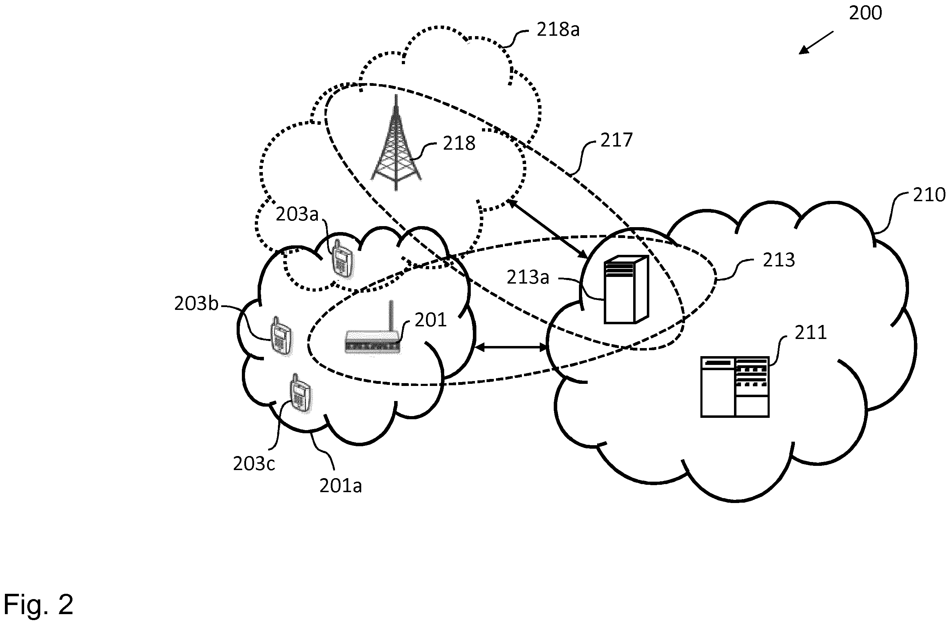

Figur 1 zeigt eine schematische Darstellung eines Verfahrens 100 zum Kommunizieren über ein Kommunikationsnetzwerk, beispielsweise das in Figur 2 dargestellte Kommunikationsnetzwerk 200 mit einer ersten Basisstation 201, insbesondere einer WLAN-Basisstation 201, einer zweiten Basisstation 218, insbesondere einer Mobilfunk-Basisstation 218 und mehreren Kommunikationsendgeräten 203a-c.

Das Verfahren 100 umfasst einen Schritt 101 des Bereitstellens und Betreibens eines ersten logischen Subnetzwerkes 213 des Kommunikationsnetzwerkes 200 mittels einer Managemententität 211, wobei im Betrieb des ersten logischen Subnetzwerkes 213 des Kommunikationsnetzwerkes 200 die WLAN-Basisstation 201 dem ersten logischen Subnetzwerk 213 zugeordnet ist und ausgebildet ist, den Kommunikationsendgeräten 203a-c die Kommunikation über das erste logische Subnetzwerk 213 des Kommunikationsnetzwerks 200 zu ermöglichen.

Das Verfahren 100 umfasst einen weiteren Schritt 103, ansprechend auf eine Zustandsänderung der WLAN-Basisstation 201, des Bereitstellens und Betreibens eines zweiten logischen Subnetzwerkes 217 des Kommunikationsnetzwerkes 200 mittels der Managemententität 211, wobei im Betrieb des zweiten logischen Subnetzwerkes 217 des Kommunikationsnetzwerkes 200 die Mobilfunk-Basisstation 218 dem zweiten logischen Subnetzwerk 217 zugeordnet ist und ausgebildet ist, den Kommunikationsendgeräten 203a-c die Kommunikation über das zweite logische Subnetzwerk 217 des Kommunikationsnetzwerks 200 zu ermöglichen.

Das in der Figur 2 dargestellte Kommunikationsnetzwerk 200 umfasst ein von der WLAN-Basisstation 201 ausgebildetes Drahtlosnetzwerk 201a sowie ein Zugangsnetzwerk 210, das der WLAN-Basisstation 201 beispielsweise den Zugang zum Internet ermöglicht. Bei der WLAN-Basisstation 201 kann es sich beispielsweise um ein Home-Gateway handeln, also um die WLAN-Basisstation eines Privathaushalts. Alternativ kann die WLAN-Basisstation 201 Teil eines WiFi-Hotspots sein. Die WLAN-Basisstation 201 kann beispielsweise über eine DSL-Verbindung, Kabel-Verbindung, Glasfaser-Verbindung oder dergleichen mit dem Zugangsnetzwerk 210 verbunden sein. Die erste Basisstation 201 kann alternativ oder zusätzlich beispielsweise dazu ausgebildet sein, ein WiFi-Drahtlosnetzwerk, ein ZigBee-Drahtlosnetzwerk, ein Bluetooth-Drahtlosnetzwerk und/oder ein Drahtlosnetzwerk auf der Grundlage eines anderen Drahtlosnetzwerkstandards auszubilden oder als Femto-Basisstation ausgebildet sein. Bei der Mobilfunk-Basisstation 218 kann es sich beispielsweise um eine LTE-Basisstation oder eine 5G-Basistation 218 handeln.

In einem Default-Modus ist die WLAN-Basisstation 201 dem ersten logischen Subnetzwerk 213 des Kommunikationsnetzwerkes 200 zugeordnet und ausgebildet, im Betrieb des ersten logischen Subnetzwerkes 213 mit den Kommunikationsendgeräten 203a-c zu kommunizieren, d.h. im Betrieb des ersten logischen Subnetzwerkes 213 ermöglicht die WLAN-Basisstation 201 als Teil des ersten logischen Subnetzwerkes 213 den Kommunikationsendgeräten 203a-c über das Zugangsnetzwerk 210 auf das Internet zuzugreifen.

Gemäß der Erfindung handelt es sich bei dem ersten logischen Subnetzwerk 213 um einen ersten Slice 213 des Kommunikationsnetzwerkes 200. Der Begriff "Netzwerk-Slice" bzw. "Netzwerk-Slicing" betrifft ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt ein Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

Der erste Netzwerk-Slice 213 kann von der Managemententität 211 bereitgestellt, d.h. instanziiert, betrieben und verwaltet werden. Die Management 211 kann als SDN-Orchestatror ausgebildet sein, wobei die Abkürzung "SDN" für "software defined networking" steht. Ferner kann ein SDN-Controller 213a vorgesehen sein, der insbesondere den Datenfluss in der ersten Netzwerk-Slice 213 steuert.

Für den Fall, dass der Benutzer/Besitzer der WLAN-Basisstation 201 zeitweise keinen Bedarf für die Verwendung des WLAN-Basisstation 201 hat, d.h. mit seinen Kommunikationsendgeräten, beispielsweise dem Kommunikationsendgerät 203a, nicht auf das Internet zugreifen muss und die WLAN-Basisstation 201 ausschaltet, oder der Zustand der WLAN-Basisstation 201 auf andere Art und Weise derart geändert wird, dass das Kommunikationsendgerät 203a nicht mehr über die WLAN-Basisstation 201 und somit den ersten Netzwerk-Slice 213 des Kommunikationsnetzwerks 200 kommunizieren kann, beispielsweise aufgrund eines technischen Defekts der WLAN-Basisstation 201, ist erfindungsgemäß vorgesehen, dass in Reaktion auf eine solche Zustandsänderung der WLAN-Basisstation 201 die Managemententität 211 ein zweites logisches Subnetzwerk 217 im Form eines zweiten Netzwerk-Slices 217 des Kommunikationsnetzwerkes 200 bereitstellt und betreibt. Dabei ist im Betrieb des zweiten Netzwerk-Slices 217 die Mobilfunk-Basisstation 218 diesem zugeordnet und ausgebildet, den Kommunikationsendgeräten 203a-c die Kommunikation über das zweite Netzwerk-Slice 217 des Kommunikationsnetzwerks 200 und somit beispielsweise den Zugang zum Internet zu ermöglichen.

Gemäß Ausführungsformen der Erfindung ist es vorstellbar, dass in Reaktion darauf, dass die Zustandsänderung, welche das Umschalten auf die zweite Netzwerk-Slice 217b veranlasst hat, wieder rückgängig gemacht wird, indem beispielsweise die WLAN-Basisstation 201 wieder eingeschaltet wird, wiederum die erste Netzwerk-Slice 213 bereitgestellt wird, sofern diese eh nicht noch vorhanden ist, und die zweite Basisstation 201 der ersten Netzwerk-Slice 213 zugeordnet wird, um dem Kommunikationsendgerät 203a-c über die erste Netzwerk-Slice 213 den Zugang zum Internet zu ermöglichen.

Der Datenfluss in der zweiten Netzwerk-Slice 217 kann ebenfalls von dem SDN-Controller 213a oder einem eigenen separaten SDN-Controller gesteuert werden.

Gemäß Ausführungsformen der Erfindung kann die zweite Netzwerk-Slice 217 neben der in Figur 2 dargestellten Mobilfunk-Basisstation weitere Mobilfunk-Basisstationen umfassen, die beispielsweise den Funkbereich 201a der WLAN-Basisstation 201 abdecken und somit den Kommunikationsendgeräten 203a-c die Kommunikation über die zweite Netzwerk-Slice 217 ermöglichen.

Gemäß einer Ausführungsform ist die Managemententität 211 dazu ausgebildet, beim Bereitstellen der zweiten Netzwerk-Slice 217 die Mobilfunk-Basisstation 218 und ggf. weitere Mobilfunk-Basisstationen, die der zweiten Netzwerk-Slice 217 zugeordnet werden sollen, aus einer Vielzahl von Mobilfunk-Basisstationen des Kommunikationsnetzwerkes auf der Grundlage der geographischen Position der WLAN-Basisstation 201 auszuwählen. Hierzu ist die Managemententität 211 gemäß einer Ausführungsform dazu ausgebildet, die geographische Position der WLAN-Basisstation 201 bestimmen zu können.

Gemäß einer Ausführungsform ist die Managemententität 211 ferner ausgebildet ist, die Zustandsänderung der WLAN-Basisstation 201 auf der Grundlage einer Änderung der Netzwerkstruktur der ersten Netzwerk-Slice 213 des Kommunikationsnetzwerkes 200 zu erkennen. Beispielsweise kann die Managemententität 211 dazu ausgebildet sein, aufgrund des Austausches von Informationen zwischen Netzknoten, insbesondere IP-Routern, in der ersten Netzwerk-Slice 213 darüber, welche anderen Netzknoten von einem jeweiligen Netzknoten erreicht werden können, zu bestimmen, ob die WLAN-Basisstation 201 in der Netzwerk-Slice 213 erreichbar ist oder nicht.

## Patentansprüche

1. Verfahren (100) zum Kommunizieren über ein Kommunikationsnetzwerk (200) mit einer ersten Basisstation (201), einer zweiten Basisstation (218) und einem Kommunikationsendgerät (203a-c), wobei das Verfahren (100) umfasst:
Bereitstellen und Betreiben (101) eines ersten Subnetzwerkes (213) des Kommunikationsnetzwerkes (200) mittels einer Managemententität (211), wobei im Betrieb des ersten Subnetzwerkes (213) des Kommunikationsnetzwerkes (200) die erste Basisstation (201) dem ersten Subnetzwerk (213) zugeordnet ist und ausgebildet ist, dem Kommunikationsendgerät (203a-c) die Kommunikation über das erste Subnetzwerk (213) des Kommunikationsnetzwerks (200) zu ermöglichen; und
ansprechend auf eine Zustandsänderung der ersten Basisstation (201), Bereitstellen und Betreiben (103) eines zweiten Subnetzwerkes (217) des Kommunikationsnetzwerkes (200) mittels der Managemententität (211), wobei im Betrieb des zweiten Subnetzwerkes (217) des Kommunikationsnetzwerkes (200) die zweite Basisstation (218) dem zweiten Subnetzwerk (217) zugeordnet ist und ausgebildet ist, dem Kommunikationsendgerät (203a-c) die Kommunikation über das zweite Subnetzwerk (217) des Kommunikationsnetzwerks (200) zu ermöglichen,
wobei das Verfahren **dadurch gekennzeichnet ist, dass** das erste Subnetzwerk (213) und das zweite Subnetzwerk (217) logisch voneinander entkoppelte Slices des Kommunikationsnetzwerkes (200) sind.

2. Verfahren (100) nach Anspruch 1, wobei es sich bei der Zustandsänderung der ersten Basisstation (201) um ein Ausschalten, ein Deaktivieren oder eine andere Zustandsänderung der ersten Basisstation (201) handelt, die zur Folge hat, dass das Kommunikationsendgerät (203a-c) nicht über das erste Subnetzwerk (213) des Kommunikationsnetzwerks (200) kommunizieren kann.

3. Verfahren (100) nach Anspruch 1 oder 2, wobei das Kommunikationsnetzwerk (200) ein Zugangsnetzwerk (210) umfasst, das im Betrieb des ersten Subnetzwerkes (213) dem Kommunikationsendgerät (203a-c) über die erste Basisstation (201) den Zugang zum Internet ermöglicht und im Betrieb des zweiten Subnetzwerkes (217) dem Kommunikationsendgerät (203a-c) über die zweite Basisstation (218) den Zugang zum Internet ermöglicht.

4. Verfahren (100) nach einem der vorstehenden Ansprüche, wobei im Betrieb des zweiten Subnetzwerkes (217) des Kommunikationsnetzwerkes (200) wenigstens eine weitere Basisstation, insbesondere Mobilfunk-Basisstation, dem zweiten Subnetzwerk (217) zugeordnet ist und ausgebildet ist, dem Kommunikationsendgerät (203a-c) die Kommunikation über das zweite Subnetzwerk (217) des Kommunikationsnetzwerks (200) zu ermöglichen.

5. Verfahren (100) nach einem der vorstehenden Ansprüche, wobei das Bereitstellen und Betreiben (103) des zweiten Subnetzwerkes (217) des Kommunikationsnetzwerkes (200) mittels der Managemententität (211) das Auswählen der zweiten Basisstation (218) aus einer Vielzahl von Mobilfunk-Basisstationen des Kommunikationsnetzwerkes (200) auf der Grundlage der geographischen Position der ersten Basisstation (201) umfasst.

6. Verfahren (100) nach Anspruch 5, wobei das Auswählen der zweiten Basisstation (218) aus einer Vielzahl von Mobilfunk-Basisstationen des Kommunikationsnetzwerkes (200) auf der Grundlage der geographischen Position der ersten Basisstation (201) ferner das Bestimmen der geographischen Position der ersten Basisstation (201) durch die Managemententität (211) umfasst.

7. Verfahren (100) nach einem der vorstehenden Ansprüche, wobei das Verfahren ferner den Schritt umfasst, dass die erste Basisstation (201) die Managemententität (211) über die Zustandsänderung der ersten Basisstation (201) informiert.

8. Verfahren (100) nach einem der vorstehenden Ansprüche, wobei das Verfahren ferner den Schritt umfasst, dass die Managemententität (211) die Zustandsänderung der ersten Basisstation (201) auf der Grundlage einer Änderung der Struktur des ersten Subnetzwerkes (213) des Kommunikationsnetzwerkes (200) erkennt.

9. Verfahren (100) nach einem der vorstehenden Ansprüche, wobei die erste Basisstation (201) eine WLAN-Basisstation, eine Zigbee-Basisstation, eine Bluebooth-Basisstation oder eine Femto-Basisstation ist und wobei die zweite Basisstation (218) eine Mobilfunk-Basisstation ist.

10. Managemententität (211) für ein Kommunikationsnetzwerk (200) mit einer ersten Basisstation (201), einer zweiten Basisstation (218) und einem Kommunikationsendgerät (203a-c), wobei die Managemententität (211) ausgebildet ist:
ein erstes Subnetzwerk (213) des Kommunikationsnetzwerkes (200) bereitzustellen und zu betreiben, wobei im Betrieb des ersten Subnetzwerkes (213) des Kommunikationsnetzwerkes (200) die erste Basisstation (201) dem ersten Subnetzwerk (213) zugeordnet ist und ausgebildet ist, dem Kommunikationsendgerät (203a-c) die Kommunikation über das erste Subnetzwerk (213) des Kommunikationsnetzwerks (200) zu ermöglichen; und
ansprechend auf eine Zustandsänderung der ersten Basisstation (201), ein zweites Subnetzwerk (217) des Kommunikationsnetzwerkes (200) bereitzustellen und zu betreiben, wobei im Betrieb des zweiten Subnetzwerkes (217) des Kommunikationsnetzwerkes (200) die zweite Basisstation (218) dem zweiten Subnetzwerk (217) zugeordnet ist und ausgebildet ist, dem Kommunikationsendgerät (203a-c) die Kommunikation über das zweite Subnetzwerk (217) des Kommunikationsnetzwerks (200) zu ermöglichen,
wobei die Managemententität **dadurch gekennzeichnet ist, dass** das erste Subnetzwerk (213) und das zweite Subnetzwerk (217) logisch voneinander entkoppelte Slices des Kommunikationsnetzwerkes (200) sind.

11. Managemententität (211) nach Anspruch 10, wobei die zweite Basisstation eine Mobilfunkbasisstation ist und die Managemententität (211) ferner ausgebildet ist, die zweite Basisstation (218) aus einer Vielzahl von Mobilfunk-Basisstationen des Kommunikationsnetzwerkes (200) auf der Grundlage der geographischen Position der ersten Basisstation (201) auszuwählen.

12. Managemententität (211) nach Anspruch 10 oder 11, wobei die Managemententität (211) ferner ausgebildet ist, die geographische Position der ersten Basisstation (201) zu bestimmen.

13. Managemententität (211) nach einem der Ansprüche 10 bis 12, wobei die Managemententität (211) ferner ausgebildet ist, die Zustandsänderung der ersten Basisstation (201) auf der Grundlage einer Änderung der Struktur des ersten Subnetzwerkes (213) des Kommunikationsnetzwerkes (200) zu erkennen.

14. Managemententität (211) nach einem der Ansprüche 10 bis 13, wobei es sich bei der Managemententität (211) um einen SDN-Controller oder SDN-Orchestrator handelt.

## Claims

1. A method (100) for communicating via a communication network (200) comprising a first base station (201), a second base station (218) and a communication terminal (203a-c), wherein the method (100) comprises:
provision and operation (101) of a first sub-network (213) of the communication network (200) by means of a management entity (211), wherein during operation of the first sub-network (213) of the communication network (200), the first base station (201) is assigned to the first sub-network (213) and is configured to allow the communication terminal (203a-c) to communicate via the first sub-network (213) of the communication network (200); and
in response to a change in state of the first base station (201), provision and operation (103) of a second sub-network (217) of the communication network (200) by means of the management entity (211), wherein during operation of the second sub-network (217) of the communication network (200), the second base station (218) is assigned to the second sub-network (217) and is configured to allow the communication terminal (203a-c) to communicate via the second sub-network (217) of the communication network (200),
wherein the method is **characterized in that**
the first sub-network (213) and the second sub-network (217) are slices of the communication network (200) which are logically uncoupled from one another.

2. The method (100) according to Claim 1, wherein the change in state of the first base station (201) is a disconnection, a deactivation or another change in state of the first base station (201) which results in the communication terminal (203a-c) not being able to communicate via the first sub-network (213) of the communication network (200).

3. The method (100) according to Claim 1 or 2, wherein the communication network (200) comprises an access network (210) which, during operation of the first sub-network (213), enables the communication terminal (203a-c) to access the Internet via the first base station (201) and, during operation of the second sub-network (217), enables the communication terminal (203a-c) to access the Internet via the second base station (218).

4. The method (100) according to one of the preceding claims, wherein during operation of the second sub-network (217) of the communication network (200), at least one further base station, in particular a mobile radio base station, is assigned to the second sub-network (217) and is configured to enable the communication terminal (203a-c) to communicate via the second sub-network (217) of the communication network (200).

5. The method (100) according to one of the preceding claims, wherein the provision and operation (103) of the second sub-network (217) of the communication network (200) by means of the management entity (211) comprises the selection of the second base station (218) from a plurality of mobile radio base stations of the communication network (200) based on the geographical position of the first base station (201).

6. The method (100) according to Claim 5, wherein the selection of the second base station (218) from a plurality of mobile radio base stations of the communication network (200) based on the geographical location of the first base station (201) further involves the determination of the geographical location of the first base station (201) by the management entity (211).

7. The method (100) according to one of the preceding claims, wherein the method further comprises the step that the first base station (201) informs the management entity (211) of the change in state of the first base station (201).

8. The method (100) according to one of the preceding claims, wherein the method further comprises the step that the management entity (211) recognizes the change in state of the first base station (201) based on a change in structure of the first sub-network (213) of the communication network (200).

9. The method (100) according to one of the preceding claims, wherein the first base station (201) is a WLAN base station, a Zigbee base station, a Bluetooth base station or a Femto base station, and wherein the second base station (218) is a mobile radio base station.

10. A management entity (211) for a communication network (200) having a first base station (201), a second base station (218) and a communication terminal (203a-c), wherein the management entity (211) is configured;
to provide and operate a first sub-network (213) of the communication network (200), wherein during operation of the first sub-network (213) of the communication network (200), the first base station (201) is assigned to the first sub-network (213) and is configured to enable the communication terminal (203a-c) to communicate via the first sub-network (213) of the communication network (200); and
in response to a change in state of the first base station (201), to provide and operate a second sub-network (217) of the communication network (200), wherein during operation of the second sub-network (217) of the communication network (200), the second base station (218) is assigned to the second sub-network (217) and is configured to enable the communication terminal (203a-c) to communicate via the second sub-network (217) of the communication network (200),
wherein the management entity is **characterized in that**
the first sub-network (213) and the second sub-network (217) are slices of the communication network (200) which are logically uncoupled from one another.

11. The management entity (211) according to Claim 10, wherein the second base station is a mobile radio base station and the management entity (211) is, in addition, configured to select the second base station (218) from a plurality of mobile radio base stations of the communication network (200) based on the geographical position of the first base station (201).

12. The management entity (211) according to Claim 10 or 11, wherein the management entity (211) is further configured to determine the geographical position of the first base station (201).

13. The management entity (211) according to one of Claims 10 to 12, wherein the management entity (211) is further configured to recognize the change in state of the first base station (201) based on a change in structure of the first sub-network (213) of the communication network (200).

14. The management entity (211) according to one of Claims 10 to 13, wherein the management entity (211) is an SDN controller or SDN orchestrator.

## Revendications

1. Procédé (100) pour la communication via un réseau de communication (200) avec une première station de base (201), une deuxième station de base (218), et un terminal de communication (203a-c), dans lequel le procédé (100) comprend :
la fourniture et l'exploitation (101) d'un premier sous-réseau (213) du réseau de communication (200) au moyen d'une entité de gestion (211), dans lequel, lors de l'exploitation du premier sous-réseau (213) du réseau de communication (200), la première station de base (201) est attribuée au premier sous-réseau (213) et est conçue pour permettre au terminal de communication (203a-c) la communication via le premier sous-réseau (213) du réseau de communication (200) ; et
en réponse à un changement d'état de la première station de base (201), la fourniture et l'exploitation (103) d'un deuxième sous-réseau (217) du réseau de communication (200) au moyen de l'entité de gestion (211), dans lequel, lors de l'exploitation du deuxième sous-réseau (217) du réseau de communication (200), la deuxième station de base (218) est attribuée au deuxième sous-réseau (217) et est conçue pour permettre au terminal de communication (203a-c) la communication via le deuxième sous-réseau (217) du réseau de communication (200),
dans lequel le procédé est **caractérisé en ce que**
le premier sous-réseau (213) et le deuxième sous-réseau (217) sont des tranches découplées logiquement l'une de l'autre du réseau de communication (200).

2. Procédé (100) selon la revendication 1, dans lequel, concernant le changement d'état de la première station de base (201), il s'agit d'un arrêt, d'une désactivation ou d'un autre changement d'état de la première station de base (201), lequel a pour conséquence que le terminal de communication (203a-c) ne peut pas communiquer via le premier sous-réseau (213) du réseau de communication (200).

3. Procédé (100) selon la revendication 1 ou 2, dans lequel le réseau de communication (200) comprend un réseau d'accès (210) lequel, lors de l'exploitation du premier sous-réseau (213), permet l'accès à Internet pour le terminal de communication (203a-c) via la première station de base (201), et lors de l'exploitation du deuxième sous-réseau (217), permet l'accès à Internet pour le terminal de communication (203a-c) via la deuxième station de base (218).

4. Procédé (100) selon l'une des revendications précédentes, dans lequel, lors de l'exploitation du deuxième sous-réseau (217) du réseau de communication (200), au moins une autre station de base, en particulier une station de base de radiocommunication mobile, est attribuée au deuxième sous-réseau (217) et est conçue pour permettre au terminal de communication (203a-c) la communication via le deuxième sous-réseau (217) du réseau de communication (200).

5. Procédé (100) selon l'une des revendications précédentes, dans lequel la fourniture et l'exploitation (103) du deuxième sous-réseau (217) du réseau de communication (200) au moyen de l'entité de gestion (211) comprend la sélection de la deuxième station de base (218) parmi une pluralité de stations de base de radiocommunication mobile du réseau de communication (200) sur la base de la position géographique de la première station de base (201).

6. Procédé (100) selon la revendication 5, dans lequel la sélection de la deuxième station de base (218) parmi une pluralité de stations de base de radiocommunication mobile du réseau de communication (200) comprend en outre, sur la base de la position géographique de la première station de base (201), la détermination de la position géographique de la première station de base (201) par l'entité de gestion (211) .

7. Procédé (100) selon l'une des revendications précédentes, dans lequel le procédé comprend en outre l'étape en ce que la première station de base (201) informe l'entité de gestion (211) concernant le changement d'état de la première station de base (201).

8. Procédé (100) selon l'une des revendications précédentes, dans lequel le procédé comprend en outre l'étape en ce que l'entité de gestion (211) reconnaît le changement d'état de la première station de base (201) sur la base d'un changement de la structure du premier sous-réseau (213) du réseau de communication (200).

9. Procédé (100) selon l'une des revendications précédentes, dans lequel la première station de base (201) est une station de base WLAN, une station de base Zigbee, une station de base Bluetooth, ou une station de base femto et dans lequel la deuxième station de base (218) est une station de base de radiocommunication mobile.

10. Entité de gestion (211) pour un réseau de communication (200) avec une première station de base (201), une deuxième station de base (218) et un terminal de communication (203a-c), dans laquelle l'entité de gestion (211) est conçue pour :
fournir et exploiter un premier sous-réseau (213) du réseau de communication (200), dans laquelle, lors de l'exploitation du premier sous-réseau (213) du réseau de communication (200), la première station de base (201) est attribuée au premier sous-réseau (213) et est conçue pour permettre au terminal de communication (203a-c) la communication via le premier sous-réseau (213) du réseau de communication (200) ; et
en réponse à un changement d'état de la première station de base (201), pour fournir et exploiter un deuxième sous-réseau (217) du réseau de communication (200), dans laquelle, lors de l'exploitation du deuxième sous-réseau (217) du réseau de communication (200), la deuxième station de base (218) est attribuée au deuxième sous-réseau (217) et est conçue pour permettre au terminal de communication (203a-c) la communication via le deuxième sous-réseau (217) du réseau de communication (200),
dans laquelle l'entité de gestion se **caractérise en ce que**
le premier sous-réseau (213) et le deuxième sous-réseau (217) sont des tranches découplées logiquement l'une de l'autre du réseau de communication (200).

11. Entité de gestion (211) selon la revendication 10, dans laquelle le deuxième station de base est une station de base de radiocommunication mobile et l'entité de gestion (211) est en outre conçue pour sélectionner la deuxième station de base (218) parmi une pluralité de stations de base de radiocommunication mobile du réseau de communication (200) sur la base de la position géographique de la première station de base (201).

12. Entité de gestion (211) selon la revendication 10 ou 11, dans laquelle l'entité de gestion (211) est en outre conçue pour déterminer la position géographique de la première station de base (201).

13. Entité de gestion (211) selon l'une des revendications 10 à 12, dans laquelle l'entité de gestion (211) est en outre conçue pour reconnaître le changement d'état de la première station de base (201) sur la base d'un changement de la structure du premier sous-réseau (213) du réseau de communication (200).

14. Entité de gestion (211) selon l'une des revendications 10 à 13, dans laquelle, concernant l'entité de gestion (211), il s'agit d'un contrôleur SDN ou d'un orchestrateur SDN.
